# EUROPEAN PATENT APPLICATION

(11) **EP 2 051 317 A1**
(43) Date of publication of application: **22.04.2009**
(21) Application number: 07832439.9
(22) Date of filing: 26.11.2007
(51) Int. Cl.: H01M 4/02, H01M 4/04, H01M 4/70

(54) **NEGATIVE ELECTRODE FOR RECHARGEABLE BATTERY WITH NONAQUEOUS ELECTROLYTE, PROCESS FOR PRODUCING THE NEGATIVE ELECTRODE, AND RECHARGEABLE BATTERY WITH NONAQUEOUS ELECTROLYTE USING THE NEGATIVE ELECTRODE**

(30) Priority: 13.12.2006 JP 2006335410
(71) Applicant: Panasonic Corporation, Kadoma-shi Osaka 571-8501 (JP)
(72) Inventor: UGAJI, Masaya, c/o Matsushita El. Ind. Co., Ltd., 2-1-61, Shiromi, Chuo-ku, Osaka-shi, Osaka 540-6207 (JP); HASEGAWA, Masaki, c/o Matsushita El. Ind. Co., Ltd., 2-1-61, Shiromi, Chuo-ku, Osaka-shi, Osaka 540-6207 (JP); YAMAMOTO, Taisuke, c/o Matsushita El. Ind. Co., Ltd.,, 2-1-61, Shiromi, Chuo-ku, Osaka-shi, Osaka 540-6207 (JP); OOHARA, Keisuke, c/o Matsushita El. Ind. Co., Ltd., 2-1-61, Shiromi, Chuo-ku, Osaka-shi, Osaka 540-6207 (JP)
(74) Representative: Schwabe - Sandmair - Marx
(86) International application number: PCT/JP2007/072714
(87) International publication number: WO 2008/072460

(57) **Abstract**

A negative electrode includes current collector (11) in which concave portion (12) and convex portion (13) are formed at least one surface thereof, and columnar body (15) which is formed by laminating n (n≥2) stages of columnar body portions (151 to 158) which are formed on convex portion (13) of current collector (11), and includes columnar body portions (151 to 158) in which variation direction of content ratios of elements of odd-numbered stages of columnar body portions and that of even-numbered stages of columnar body portions are different from each other, and plural protruding bodies (16) are provided on the surfaces of columnar body portions (151 to 158) at the side in which intersection angles between central lines of obliquely erected directions of columnar body portions (151 to 158) and a central line of a thickness direction of current collector (11), and space (17) is provided in columnar body (15) by protruding bodies (16) of the laminated columnar body portions (151 to 158).

## Description

### TECHNICAL FIELD

The present invention relates to a non-aqueous electrolyte secondary battery with an excellent charging/discharging characteristic, and more particularly, to a negative electrode for a non-aqueous electrolyte secondary battery which is superior in a capacity retaining ratio, a high-rate characteristic or a low-temperature characteristic, a method of manufacturing the same, and a non-aqueous electrolyte secondary battery using the same.

### BACKGROUND ART

A lithium-ion secondary battery which is representative of a non-aqueous electrolyte secondary battery has properties such as lightweight, high electromotive force and high-energy density. Accordingly, the lithium-ion secondary battery has been increasingly used as driving power sources of various types of portable electronic apparatuses or mobile communication apparatuses such as a mobile telephone, a digital camera, a video camera and a notebook type computer.

The lithium-ion secondary battery includes a positive electrode made of complex oxide containing lithium, a negative electrode including a lithium metal, a lithium alloy or a negative electrode active material inserting/extracting lithium ion, and an electrolyte.

Recently, instead of a carbon material, such as graphite, which has been conventionally used as a negative electrode material, research into an element having insertion property of a lithium ion and a theoretical capacity density of more than 833mAh/cm³ has been reported. For example, as an element of a negative electrode active material having the theoretical capacity density of more than 833mAh/cm³, there is silicon (Si), tin (Sn) or germanium (Ge) which is alloyed with lithium, oxide or ally thereof. Among them, since silicon-containing particles such as Si particles or silicon oxide particles are cheap, they have been widely investigated.

However, the volumes of these elements are increased when lithium ions are inserted during charging. For example, if the negative electrode active material is Si, Li_{4.4}Si is obtained in a state in which a maximum amount of lithium ions is inserted. Since Si is changed to Li_{4.4}Si, the volume thereof is increased to 4.12 times that of a discharging cycle.

Accordingly, if a thin film of the element is deposited on a current collector by a CVD method or a sputtering method so as to form a negative electrode active material, the negative electrode active material expands or contracts by inserting/extracting the lithium ion and peeling may occur due to deterioration of adhesion of the negative electrode active material and a negative electrode current collector in repeated charging/discharging cycle.

In order to solve the above-described problems, a method (for example, see Patent Document 1) of forming irregularities in the surface of a current collector, depositing a negative electrode active material thin film thereon, and forming a space in a thickness direction by etching was disclosed. In addition, a method of providing a mesh on a current collector, depositing a negative electrode active material thin film through the mesh, and suppressing the deposition of the negative electrode active material in a region corresponding to a frame of the mesh was suggested (for example, see Patent Document 2).

In addition, a method of forming irregularities in the surface a current collector and obliquely forming a thin-film-shaped negative electrode material with respect to a surface perpendicular to a main surface of the negative electrode material was suggested (for example, see Patent Document 3).

In the secondary battery disclosed in Patent Document 1 or Patent Document 2, the negative electrode active material thin film is formed in a columnar shape and the space is formed between the respective columns, thereby preventing peeling or wrinkles. However, since the negative electrode active material contracts in the start of charging, a metal surface of the current collector may be exposed through the space. Accordingly, since the exposed current collector faces a positive electrode during charging, lithium metal is susceptible to be precipitated and thus stability or capacity may deteriorate. In order to increase the capacity of the battery, if the height of the negative electrode active material having the columnar shape is increased or the interval between the spaces is decreased, a front end (an opening side) of the negative electrode active material having the columnar shape is restricted by the current collector and thus, as the charging progresses, the negative electrode active material significantly expands compared with the vicinity of the current collector. As a result, the negative electrode active materials having the columnar shape are brought into contact with each other in the vicinity of the front end thereof and thus the current collector and the negative electrode active material are peeled or wrinkles are generated in the current collector due to pushing. Accordingly, it is impossible to simultaneously realize high capacity and the prevention of the peeling of the current collector and the negative electrode active material or the generation of the wrinkles in the current collector. In addition, since an electrolyte is filled in the space between the columnar-shaped negative electrode active materials which expand and contact with each other, the movement of the lithium ions is blocked and, more particularly, a high-rate discharging or a discharging characteristic in a low-temperature environment is problematic.

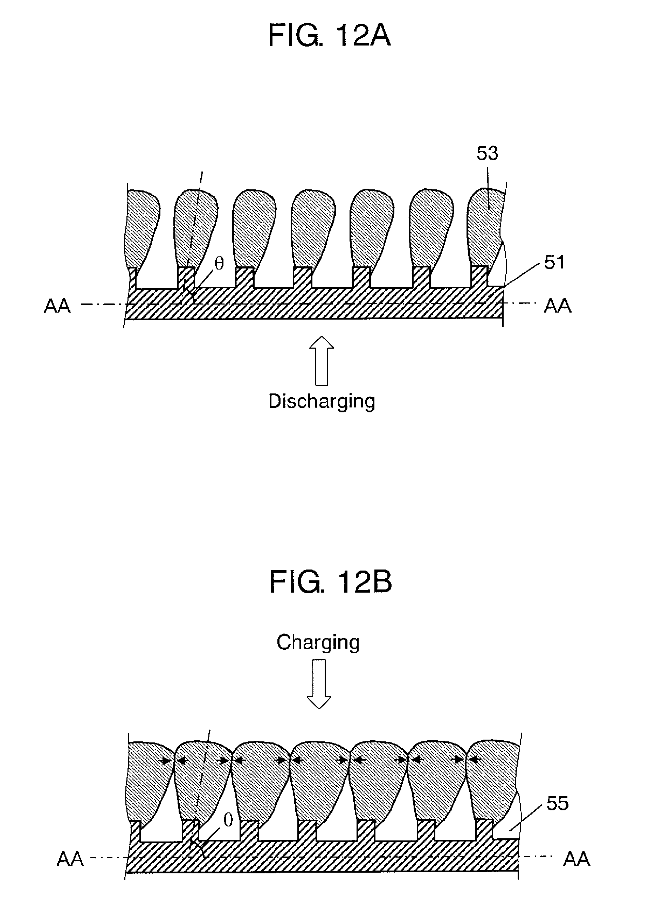

In the structure disclosed in Patent Document 3, as shown in Fig. 12A, it is possible to prevent current collector 51 from be exposed and prevent the lithium metal from being precipitated, by negative electrode active material 53 formed obliquely θ. However, similar to Patent Documents 1 and 2, as shown in Fig. 12B, since negative electrode active material 53 significantly expands compared with the vicinity of current collector 51, the negative electrode active materials having the columnar shape are brought into contact with each other in the vicinity of the front end thereof and thus current collector 51 and negative electrode active material 53 are peeled or wrinkles are generated in current collector 51 due to pushing, as denoted by an arrow of the drawing. In addition, since the negative electrode active material is obliquely formed, the negative electrode active material is formed on only two surfaces of a longitudinal direction of a convex portion of the current collector. Accordingly, stress due to the expansion/contraction of the negative electrode active material in charging/discharging cycle should be lessened by the negative electrode active material covering the two surface of the convex portion. As a result, as the charging/discharging cycle progresses, the negative electrode active material is susceptible be peeled from the surface of the convex portion by the stress and reliability deteriorates. In addition, since an electrolyte is filled in space 55 between the columnar-shaped negative electrode active materials which expand and contact with each other, the movement of the lithium ions in an initial stage of the discharge is blocked and, more particularly, a high-rate discharging or a discharging characteristic in a low-temperature environment is problematic.
[Patent Document 1] Japanese Patent Unexamined Publication No. 2003-17040
[Patent Document 2] Japanese Patent Unexamined Publication No. 2002-279974
[Patent Document 3] Japanese Patent Unexamined Publication No. 2005-196970

### DISCLOSURE OF THE INVENTION

According to an aspect of the present invention, there is provided a negative electrode for a non-aqueous electrolyte secondary battery, which reversibly inserts/extracts lithium ions, the negative electrode comprising: a current collector in which a concave portion and a convex portion are formed at least one surface thereof; and a columnar body which is formed by laminating n (n≥2) stages of columnar body portions which are obliquely erected on the convex portion of the current collector and in which a content ratio of elements sequentially vary in a longitudinal direction of the current collector, and which has a configuration in which variation directions of content ratios of elements of odd-numbered stages of columnar body portions and even-numbered stages of columnar body portions are different from each other, wherein a plurality of protruding bodies are provided on surfaces of the columnar body portions at the side in which intersection angles between central lines of obliquely erected directions of the columnar body portions and a central line of a thickness direction of the current collector forms an obtuse angle and a space is provided in the columnar body by the protruding bodies of the laminated columnar body portions.

By this configuration, since stress which is generated by expansion/contraction due to insertion/extraction of lithium ions of the columnar body can be reduced, it is possible to realize the negative electrode for the non-aqueous electrolyte secondary battery, which is capable of remarkably improving a high-rate discharging characteristic or a low-temperature characteristic during discharging with a long life span and realizing high capacity.

According to another aspect of the present invention, there is provided a method of manufacturing a negative electrode for a non-aqueous electrolyte secondary battery which reversibly inserts/extracts lithium ions, the method comprising: a first step of forming a concave portion and a convex portion on at least one surface of a current collector; a second step of forming a first stage of columnar body portion, which is obliquely erected and has a protruding body, on the convex portion; a third step of forming a second stage of columnar body portion having a protruding body, which is obliquely erected in a direction different from that of the first stage of columnar body portion, on the columnar body portion; and a fourth step of repeating the second step and the third step such that the obliquely erected directions of the odd-numbered stages of columnar body portions and the even-numbered stages of columnar body portions are different from each other, and forming a columnar body having a space formed by the protruding bodies and n (n≥2) stages of columnar body portions.

By this configuration, since stress which is generated by expansion/contraction due to insertion/extraction of lithium ions of the columnar body can be reduced by the space, it is possible to readily manufacture the negative electrode for the non-aqueous electrolyte secondary battery, which is capable of improving reliability in a charging/discharging cycle and realizing high capacity.

According to another aspect of the present invention, there is a non-aqueous electrolyte secondary battery comprising, the negative electrode for the non-aqueous electrolyte secondary battery, a positive electrode which reversibly inserts/extracts lithium ions, and a non-aqueous electrolyte. By this configuration, it is possible to manufacture the non-aqueous electrolyte secondary battery with high stability and high reliability.

### BRIEF DESCRIPTION OF THE DRAWINGS

Fig. 1 is a cross-sectional view showing a non-aqueous electrolyte secondary battery in accordance with an exemplary embodiment of the present invention.
Fig. 2A is a partial cross-sectional view showing the structure of a negative electrode in accordance with the exemplary embodiment of the present invention.
Fig. 2B is a schematic view explaining a variation in value of x in a width direction of an active material in accordance with the same embodiment.
Fig. 3A is a partial cross-sectional view showing the structure of the negative electrode before charging, in accordance with the exemplary embodiment of the present invention.
Fig. 3B is a partial cross-sectional view showing the structure of the negative electrode after charging, in accordance with the exemplary embodiment of the present invention.
Fig. 4A is a partial cross-sectional view showing a state of the non-aqueous electrolyte secondary battery before charging, in accordance with the exemplary embodiment of the present invention.
Fig. 4B is a partial cross-sectional view showing a state of the non-aqueous electrolyte secondary battery after charging, in accordance with the same embodiment.
Fig. 5A is a partial cross-sectional view showing a state of a columnar body of the negative electrode before charging, in accordance with the exemplary embodiment of the present invention.
Fig. 5B is a partial cross-sectional view showing a state of the columnar body of the negative electrode after charging, in accordance with the same embodiment.
Fig. 6A is a partial cross-sectional view explaining a method of forming a columnar body including protruding bodies of the negative electrode for the non-aqueous secondary battery in accordance with the exemplary embodiment of the present invention.
Fig. 6B is a partial cross-sectional view explaining the method of forming the columnar body including the protruding bodies of the negative electrode for the non-aqueous secondary battery in accordance with the exemplary embodiment of the present invention.
Fig. 6C is a partial cross-sectional view explaining the method of forming the columnar body including the protruding bodies of the negative electrode for the non-aqueous secondary battery in accordance with the exemplary embodiment of the present invention.
Fig. 6D is a partial cross-sectional view explaining the method of forming the columnar body including the protruding bodies of the negative electrode for the non-aqueous secondary battery in accordance with the exemplary embodiment of the present invention.
Fig. 7A is a partial cross-sectional view explaining a method of forming the columnar body formed of n stages of columnar body portions of the negative electrode for the non-aqueous secondary battery in accordance with the exemplary embodiment of the present invention.
Fig. 7B is a partial cross-sectional view explaining the method of forming the columnar body formed of the n stages of columnar body portions of the negative electrode for the non-aqueous secondary battery in accordance with the exemplary embodiment of the present invention.
Fig. 7C is a partial cross-sectional view explaining the method of forming the columnar body formed of the n stages of columnar body portions of the negative electrode for the non-aqueous secondary battery in accordance with the exemplary embodiment of the present invention.
Fig. 7D is a partial cross-sectional view explaining the method of forming the columnar body formed of the n stages of columnar body portions of the negative electrode for the non-aqueous secondary battery in accordance with the exemplary embodiment of the present invention.
Fig. 7E is a partial cross-sectional view explaining the method of forming the columnar body formed of the n stages of columnar body portions of the negative electrode for the non-aqueous secondary battery in accordance with the exemplary embodiment of the present invention.
Fig. 8 is a schematic view showing an apparatus for manufacturing the columnar body formed of the n stages of columnar body portions of the negative electrode for the non-aqueous secondary battery in accordance with the exemplary embodiment of the present invention.
Fig. 9A is a partial cross-sectional view showing another example of the structure of the negative electrode in accordance with the exemplary embodiment of the present invention.
Fig. 9B is a schematic view explaining a variation in value of x in a width direction of an active material in accordance with the same embodiment.
Fig. 10A is a partial cross-sectional view showing a state of another example of the non-aqueous secondary battery before charging, in accordance with the exemplary embodiment of the present invention.
Fig. 10B is a partial cross-sectional view showing a state of another example of the non-aqueous secondary battery after charging, in accordance with the same embodiment.
Fig. 11 is a view showing an example of charging/discharging cycle characteristics in samples of embodied example and comparative example.
Fig. 12A is a partial cross-sectional view showing the structure of a conventional negative electrode before charging.
Fig. 12B is a partial cross-sectional view showing the structure of the conventional negative electrode after charging.

### REFERENCE MARKS IN THE DRAWINGS

1: negative electrode
1a, 11: current collector (negative electrode current collector)
1b, 15: columnar body
2, 18: positive electrode
2a: positive electrode current collector
2b: positive electrode mixture layer
3: separator
4: electrode group
5: armored case
12: concave portion
13: convex portion
15a: lower side
15b: upper side
16, 161, 162, 163, 164, 165: protruding body
17: space
19: electrolyte (non-aqueous electrolyte)
40: manufacturing apparatus
41: vacuum chamber
42: gas introduction pipe
43: fixing stand
45: nozzle
46: deposition source
47: vacuum pump
151, 152, 153, 154, 155, 156, 157, 158: columnar body portion

### DETAILED DESCRIPTION OF THE PREFERRED EMBODIMENTS

Hereinafter, exemplary embodiments of the present invention will be described with reference to the accompanying drawings, in which like portions are denoted by like reference numerals. The present invention is implemented on the basis of basic features described in the present specification but is not limited to the following contents.

### Exemplary Embodiment

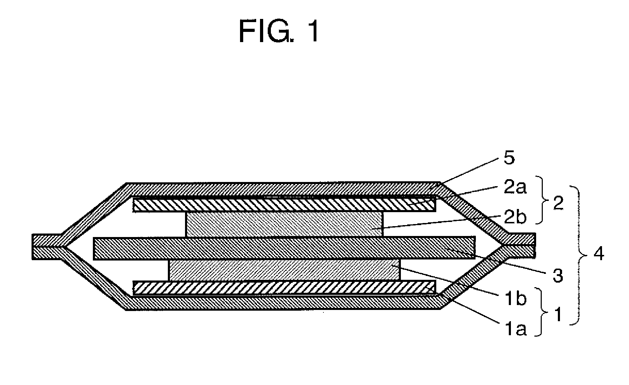

Fig. 1 is a cross-sectional view showing a non-aqueous electrolyte secondary battery in accordance with an exemplary embodiment of the present invention.

As shown in Fig. 1, a lamination type non-aqueous electrolyte secondary battery (hereinafter often referred to as "battery") includes electrode group 4 including negative electrode 1, positive electrode 2 which faces negative electrode 1 and reduces lithium ions during discharging, and porous separator 3 which is interposed between negative electrode 1 and positive electrode 2 for directly contacting the negative electrode and the positive electrode. The electrode group 4 and an electrolyte (not shown) having lithium ion conductivity are accommodated in armored case 5. The electrolyte having the lithium ion conductivity is impregnated in separator 3. One ends of a positive lead (not shown) and a negative lead (not shown) are respectively connected to positive electrode current collector 2a and negative electrode current collector 1a and the other ends thereof are led to the outside of armored case 5. An opening of armored case 5 is sealed by a resin material. Positive electrode 2 includes positive electrode current collector 2a and positive electrode mixture layer 2b supported by positive electrode current collector 2a.

As described below in detail, negative electrode 1 includes negative electrode current collector 1a (hereinafter referred to as "current collector") having a concave portion and a convex portion and zigzag columnar body 1b in which n (n≥2) stages of columnar body portions having protruding bodies erected obliquely are laminated so as to cover at least two surfaces in a section of a longitudinal-direction of a protrusion portion of the convex portion.

Here, in columnar body 1b, a space is provided by the protruding bodies formed in the plurality of columnar body portions. The protruding bodies are provided in at least the surfaces of the columnar body portions at the side in which intersection angles between central lines of obliquely erected directions of the columnar body portions and a central line of a thickness of the negative electrode current collector are obtuse angles.

The columnar body portions are formed by sequentially changing a content ratio of elements configuring them in a longitudinal direction of a convex portion of the current collector. In addition, the laminated n (n≥2) stages of columnar body portions are formed such that odd-numbered stages of columnar body portion and even-numbered stages of columnar body portion are different from each other in the change direction of the content ratio of the elements.

The two surfaces of the convex portion indicate surfaces of the cross section when the protrusion portion of the convex portion is cut in the longitudinal direction. In more detail, for example, if the convex portion is a rectangular parallelepiped, the convex portion has total five surfaces including the upper surface of the convex portion and the side surfaces of the convex portion excluding a bottom surface of the convex portion. Accordingly, the surfaces covered by a first stage of columnar body portion become the upper surface of the convex portion and one of the side surfaces of the convex portion. Here, if the columnar body portion is formed in a direction perpendicular to the side surfaces of the convex portion, the covered surface becomes one surface and, if not perpendicular, the covered surface becomes two surfaces. In addition, if the shape of the convex portion is elliptic or cylindrical when viewing the convex portion from the upper surface, the formation surfaces of the columnar body portion become the upper surface and the side surface of the convex portion and the surfaces covered by the first stage of columnar body portion become a portion of the upper surface of the side surface of the convex portion.

Here, positive electrode mixture layer 2b includes complex oxide containing lithium such as LiCoO₂, LiNiO₂, Li₂MnO₄, or a mixture or complex compound thereof as the positive electrode active material. As the positive electrode active material, olivine-type lithium phosphate expressed by a general formula of LiMPO₄(M=V, Fe, Ni, Mn) or lithium fluorophosphates expressed by a general formula of Li₂MPO₄F(M=V, Fe, Ni, Mn) may be used. A portion of the compound containing lithium may be replaced with a heteroelement. Surface treatment may be made by metal oxide, lithium oxide or a conductive agent or surface hydrophobic may be made.

Positive electrode mixture layer 2b further includes a conductive agent and a binder. As the conductive agent, graphite such as natural graphite or artificial graphite, carbon black such as acetylene black, Ketchen black, channel black, furnace black, lamp black or thermal black, conductive fibers such as carbon fiber or metal fiber, metal powder such as carbon fluoride or aluminum, conductive whisker such as zinc oxide or potassium titanate, conductive metal oxide such as titanium oxide, or an organic conductive material such as phenylene derivative may be used.

As the binder, for example, PVDF, polytetrafluoroethylene, polyethylene, polypropylene, aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyether sulfone, hexafluoropolypropylene, styrene-butadiene rubber, or carboxymethyl cellulose may be used. In addition, a copolymer of at least two selected from tetrafluoroethylene, hexafluoroethylene, hexafluoropropylene, perfluoroalkylvinyl ether, vinylidene fluoride, chlorotrifluoroethylene, ethylene, propylene, pentafluoropropylene, fluoromethyl vinyl ether, acrylic acid, and hexadiene may be used. A mixture of at least two selected therefrom may be used.

As positive electrode current collector 2a used in positive electrode 2, aluminum (Al), carbon or conductive resin may be used. One of these materials may be subjected to surface treatment by carbon or the like.

In the non-aqueous electrolyte, an electrolyte solution in which a solute is dissolved in an organic solvent or so-called polymer electrolyte layer which includes them and is non-fluidized with a polymer is applicable. If at least the electrolyte solution is used, the electrolyte solution is preferably impregnated to separator 3 such as nonwoven fabric made of polyethylene, polypropylene, aramid resin, amideimide, polyphenylene sulfide or polyimide or microporous membrane between positive electrode 2 and negative electrode 1. Heat-resistant filler such as alumina, magnesia, silica or titania may be contained in separator 3 or in the surface of the separator. In additional of separator 3, a heat resistant layer made of the filler and the same binder as that used in positive electrode 2 and negative electrode 1 may be provided.

The non-aqueous electrolyte material is selected on the basis of an oxidation reduction potential of the active material. As the preferable solute used in the non-aqueous electrolyte, salt which is generally used in the lithium battery, such as LiPF₆, LiBF₄, LiClO₄, LiAlCl₄, LiSbF₆, LiSCN, LiCF₃iSO₃, LiNCF₃CO₂, LiAsF₆, LiB₁₀Cl₁₀, lower aliphatic lithium carboxylate, LiF, LiCl, LiBr, LiI, borides such as chloroborane lithium, bis(1,2-benzene diolate(2-)-O,O') lithium borate, bis(2,3-naphthalene diolate (2-)-O,O') lithium borate, bis(2,2'-biphenyl diolate(2-)-O,O') lithium borate, bis(5-fluoro-2-olate-1-benzenesulfonic acid-O,O') lithium borate, (CF₃SO₂)₂NLi, LiN(CF₃SO₂)(C₄F₉SO₂), (C₂F₅SO₂)₂NLi, or tetraphenyl lithium borate, may be used.

As the organic solvent for dissolving the salt, a mixture of at least one ethylene carbonate (EC), propylene carbonate, butylene carbonate, vinylene carbonate, dimethylene carbonate (DMC), diethyl carbonate, ethylmethyl carbonate (EMC), dipropyl carbonate, methyl formate, methyl acetate, methyl propionate, ethyl propionate, dimethoxymethane, γ-butyrolactone, γ-valerolactone, 1,2-diethoxyethane, 1,2-dimethoxyethane, ethoxymethoxyethane, trimethoxymethane, tetrahydrofuran, tetrahydrofuran derivative such as 2-methyltetrahydrofuran, dimethylsulfoxide, a dioxolan derivative such as 1,3-dioxolan, 4-methyl-1,3-dioxolan, formamide, acetamide, dimethylformamide, acetonitrile, propylnitrile, nitromethane, ethylmonoglyme, phosphate triester, acetate ester, propionate ester, sulfolane, 3-methylsulfolane, 1,3-dimethyl-2-imidazolidinone, 3-methyl-2-oxazolidinone, propylene carbonate derivative, ethyl ether, diethyl ether, 1,3-propane sultone, anisole, fluorobenzene may be applied to the solvent which is generally used in the lithium battery.

In addition, an additive such as vinylene carbonate, cyclohexylbenzene, biphenyl, diphenyl ether, vinyl ethylene carbonate, divinyl ethylene carbonate, phenyl ethylene carbonate, diaryl carbonate, fluoroethylene carbonate, catechol carbonate, vinyl acetate, ethylene sulfite, propane sultone, trifluoropropylene carbonate, dibenzofuran, 2,4-difluoroanisole, o-terphenyl, or m-terphenyl may be contained.

The non-aqueous electrolyte may be as a solid electrolyte by mixing the solute with a mixture of at least one of a polymer material such as polyethylene oxide, polypropylene oxide, polyphosphazene, polyaziridine, polyethylene sulfide, polyvinyl alcohol, polyvinylidene-fluoride, polyhexafluoropropylene. In addition, the non-aqueous electrolyte may be mixed with the organic solvent so as to be used in a gel shape. An inorganic material such as lithium nitride, lithium halide, lithium oxyacid salt, Li₄SiO₄, Li₄SiO₄-LiI-LiOH, Li₃PO₄-Li₄SiO₄, Li₂SiS₃, Li₃PO₄-Li₂S-SiS₂, or phosphorus sulfide compound may be used as the solid electrolyte. If the gel non-aqueous electrolyte is used, the gel non-aqueous electrolyte may be interposed between negative electrode 1 and positive electrode 2 instead of separator 3. Alternatively, the gel non-aqueous electrolyte may be provided adjacent to separator 3.

As current collector 1a of negative electrode 1, a metal foil such as stainless steel, nickel, copper, or titanium or a thin film of carbon or conductive resin may be used. Surface treatment may be made by carbon, nickel or titanium.

As the columnar body portion configuring columnar body 1b of negative electrode 1, an active material which reversibly inserts/extracts lithium ions such as silicon (Si) or tin (Sn) and has theoretical capacity density of more than 833mAh/cm³ may be used. If this active material is used, any one of elementary substance, an alloy, a compound, a solid solution and a complex active material including a silicon containing material or a tin containing material may be used and the effect of the present invention can be obtained. That is, as the silicon containing material, Si, SiOx(0<x≤2.0), an alloy or compound in which a portion of Si is substituted with at least one element selected from a group including Al, In, Cd, Bi, Sb, B, Mg, Ni, Ti, Mo, Co, Ca, Cr, Cu, Fe, Mn, Nb, Ta, V, W, Zn, C, N, and Sn, or a solid solution may be used. As the tin containing material, Ni₂Sn₄, Mg₂Sn, SnOx(0<x<2.0), SnO₂, SnSiO₃, or LiSnO may be used.

The columnar body portion may be a single active material or may be configured by a plurality of active materials. As an example in which the columnar body portion is configured by the plurality of active materials, there are a compound containing Si, oxygen and nitrogen and a plurality of compounds containing Si and oxygen and different configuration ratios of Si and oxygen.

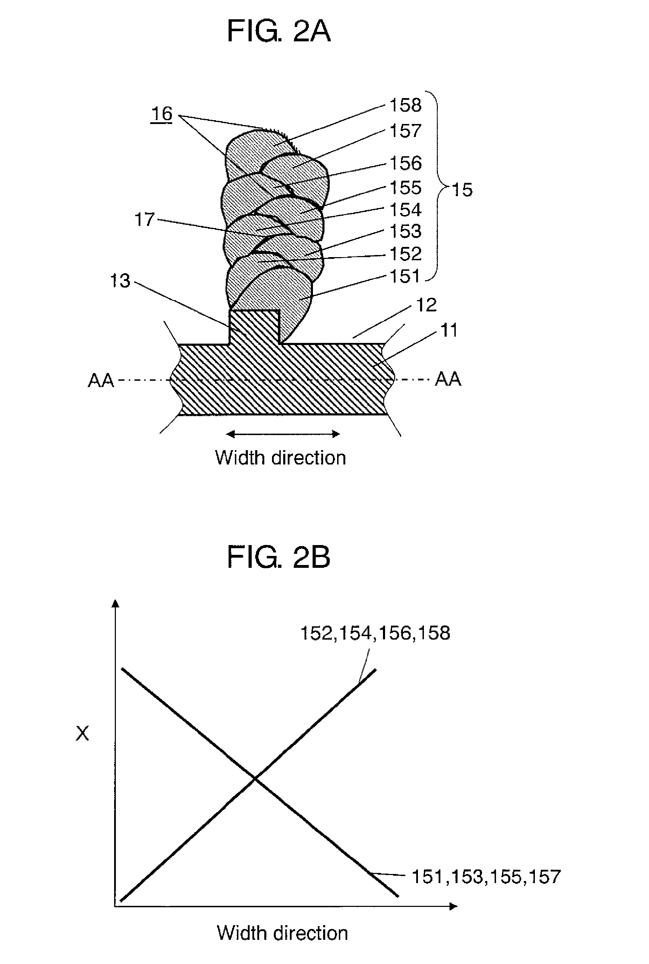

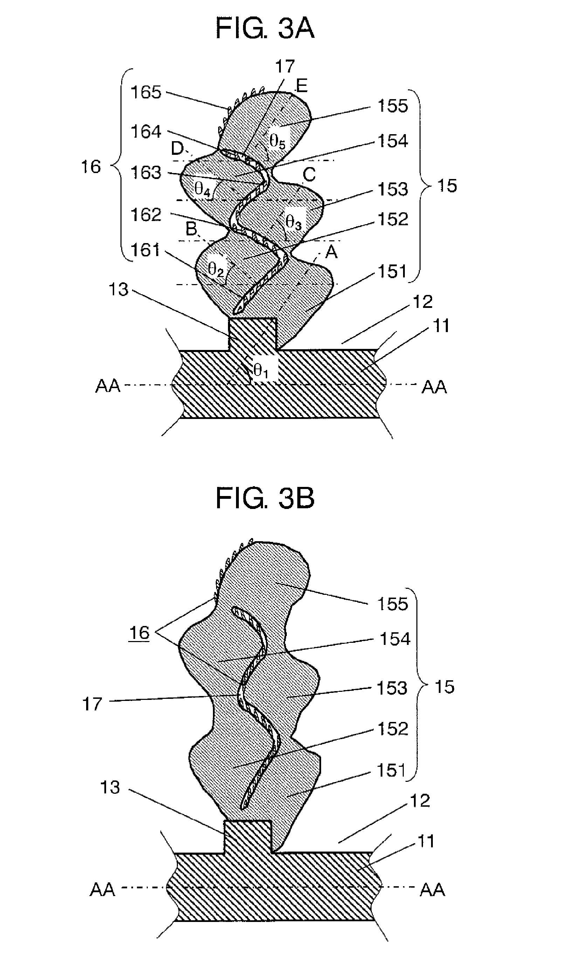

Hereinafter, the negative electrode for the non-aqueous secondary battery (which hereinafter may be referred to as "negative electrode") in accordance with the exemplary embodiment of the present invention will be described in detail with reference to Figs. 2A, 2B, 3A and 3B. Hereinafter, for example, a negative electrode active material (hereinafter referred to as "active material") expressed by SiOx(0≤x≤2.0) containing at least silicon will be described.

Fig. 2A is a partial cross-sectional view showing the structure of the negative electrode in accordance with the exemplary embodiment of the present invention. Fig. 2B is a schematic view explaining a variation in value of x in a width direction of an active material in accordance with the same embodiment. Fig. 3A is a partial cross-sectional view showing the structure of the negative electrode before charging, in accordance with the exemplary embodiment of the present invention. Fig. 3B is a partial cross-sectional view showing the structure of the negative electrode after charging, in accordance with the exemplary embodiment of the present invention. Figs. 3A and 3B show the structure of the negative electrode at any scale in order to facilitate the understanding of the space of the columnar body formed by the protruding bodies of the plurality of columnar body portions.

As shown in Fig. 2A, for example, concave portion 12 and convex portion 13 are provided on at least an upper surface of current collector 11 made of a conductive metal material such as a copper (Cu) foil. On convex portion 13, the active material which configures columnar body 15 and is expressed by SiOx is formed in a zigzag shape by an oblique vapor-deposition method using a sputtering method or a vacuum vapor-deposition method such that the columnar body 15 including n (n≥2) stages of columnar body portions, in which the obliquely erected directions of the odd-numbered stages of columnar body portion and the even-numbered stages of columnar body portion are different from each other, is formed. Fig. 2A shows a state in which, for example, columnar body portions 151 to 158 are formed in the zigzag shape in n=8 stages.

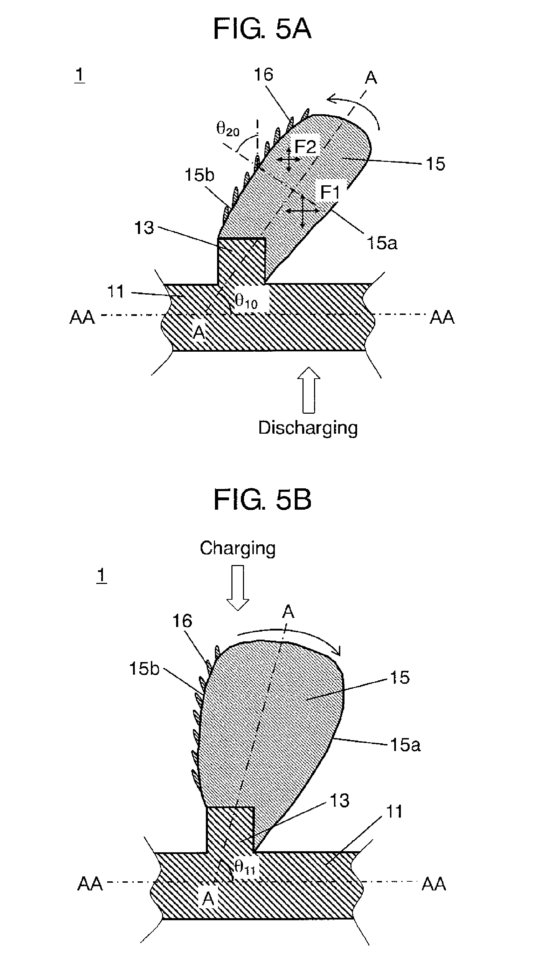

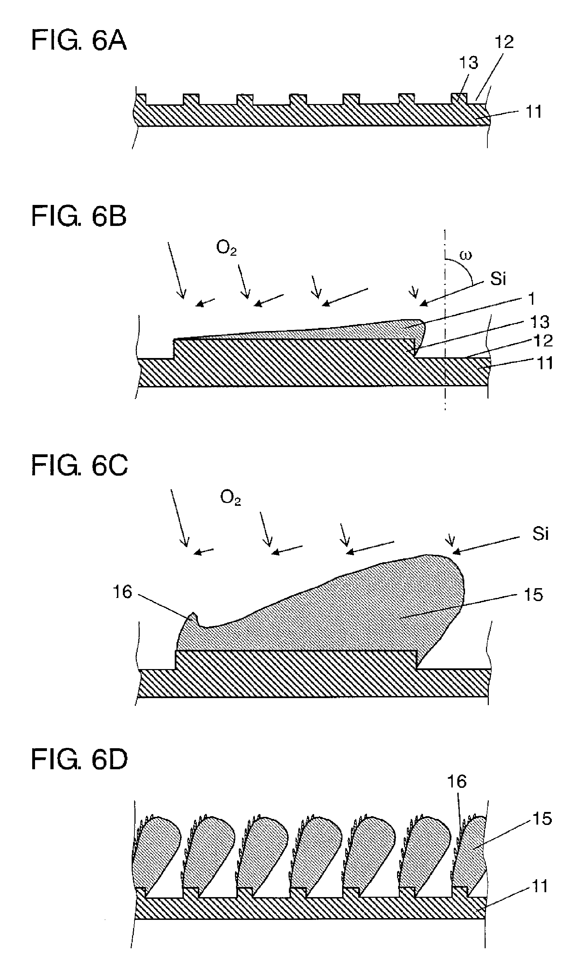

For example, first stage of columnar body 151 configuring columnar body 15 has a plurality of protruding bodies 16 at a side in which intersection angle θ₁₀ of central line A-A of the obliquely erected direction thereof and central line AA-AA of the thickness of the current collector 11 is an obtuse angle 180-θ₁₀, as described with reference to Figs. 5A, 5B, 6A and 6B. As shown in Fig. 2A, second stage of columnar body portion 152 is formed in a direction different from the obliquely erected direction of first stage of columnar body portion 151 and protruding bodies 16 are formed at the obtuse-angle side thereof. Protruding bodies 16 are formed on the surface of the columnar body 15 so as to be distant from current collector 11 in direction having angle θ₂₀ between central line A-A of the obliquely erected direction of columnar body 15 and a vertical line thereof.

Subsequently, columnar body portions 153 to 158 formed such that the odd-numbered stages of columnar body portion is formed in the same direction as columnar body portion 151 and the even-numbered stages of columnar body portion is formed in the same direction as columnar body portion 152. The columnar body portions may be formed in any direction which is allowable in productivity or the configuration of a manufacturing apparatus.

As a result, the columnar body 15 which is laminated through the protruding bodies 16 formed in the columnar body portions and has the space 17 shown in Fig. 2A is formed, by forming the plurality of columnar body portions in a zigzag shape.

Hereinafter, although columnar body 15 configured by laminating columnar body portions 151, 152, 153, 154 and 155 in n=5 stages is described in detail with reference to Figs. 3A and 3B, the present invention is not limited thereof if n≥2 stages.

First, as shown in Fig. 3A, columnar body portion 151 of columnar body 15 is formed so as to form intersection angle (hereinafter referred to as "obliquely erected angle") θ₁ between central line A of the obliquely erected direction of columnar body portion 151 and central line AA-AA of the thickness of current collector 11 on at least convex portion 13 of current collector 11. Columnar body portion 152 of columnar body 15 is formed so as to form obliquely angle θ₂ between central line B of the obliquely erected direction thereof and central line AA-AA of the thickness of current collector 11 so as to cover protruding body 161 of columnar body portion 151. Columnar body portion 153 of columnar body 15 is formed so as to form obliquely angle θ₃ between central line C of the obliquely erected direction thereof and central line AA-AA of the thickness of current collector 11 so as to cover protruding body 162 of columnar body portion 152. Columnar body portion 154 of columnar body 15 is formed so as to form obliquely angle θ₄ between central line D of the obliquely erected direction thereof and central line AA-AA of the thickness of current collector 11 so as to cover protruding body 163 of columnar body portion 153. Columnar body portion 155 of columnar body 15 is formed so as to form obliquely angle θ₅ between central line E of the obliquely erected direction thereof and central line AA-AA of the thickness of current collector 11 so as to cover protruding body 164 of columnar body portion 154, and the protruding bodies 165 are formed at the obtuse-angle side.

By this configuration, porous space 17 is formed in the center of columnar body 15 by the protruding bodies of the columnar body portions. At this time, although the protruding bodies are formed in the entire surface at the obtuse-angle sides obliquely erected in the columnar body portions, the protruding bodies may be formed only in the vicinity of the top of the obtuse-angle surfaces of the columnar body portions, by a deposition condition.

Protruding bodies 165 of columnar body portion 155 are not necessarily required and may not be formed. Obliquely erected angles θ₁, θ₂, θ₃, θ₄, θ₅ may be equal to or different from each other if adjacent columnar bodies 15 are not brought into contact with each other by expansion/contraction at the time of insertion/extraction of lithium ions.

As shown in Fig. 2B, columnar body portions 151, 152, 153, 154, 155, 156, 157 and 158 configuring columnar body 15 are provided such that, for example, odd-numbered stages of columnar body portions 151, 153, 155 and 157 and even-numbered stages of columnar body portions 152, 154, 156 and 158 are different from each other in the content ratio of the element in the width direction, for example, in the direction in which a value of x varies. That is, the value of x is gradually increased from the obliquely erected angle forming an acute angle of columnar body portions 151, 153, 155 and 157 to a side forming an obtuse angle. Although the value of x linearly varies in Fig. 2B, the present invention is not limited thereto.

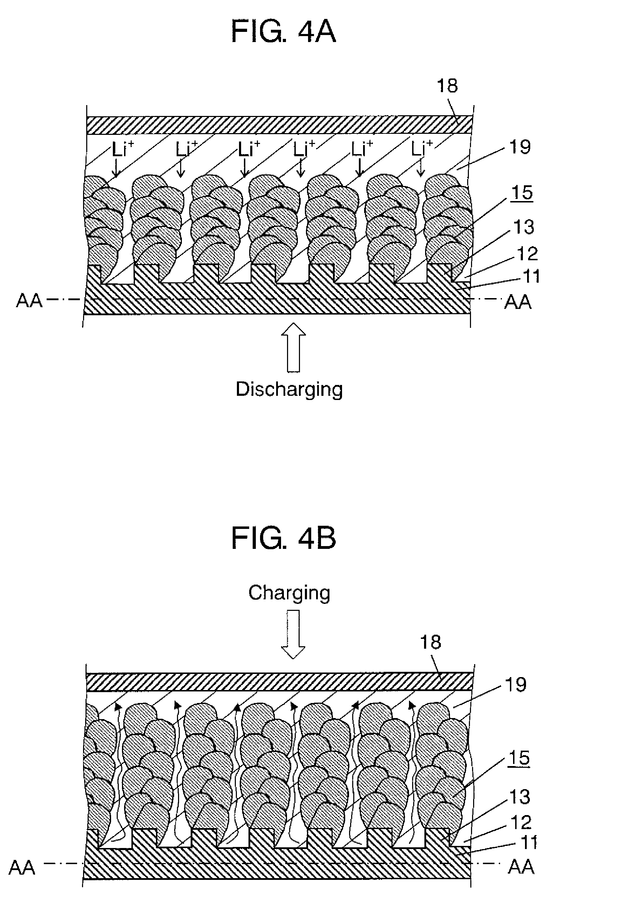

The volume of columnar body 15 which is formed by laminating the columnar body portions erected obliquely in n=5 stages in the zigzag shape on convex portion 13 of current collector 11 expands by the insertion of the lithium ions at the time of charging the non-aqueous electrolyte secondary battery At this time, together with the expansion of the volume, as the operation thereof is described in detail with reference to Figs. 4A and 4B, obliquely erected angles θ₁, θ₂, θ₃, θ₄, θ₅ of columnar body portions 151, 152, 153, 154 and 155 of columnar body 15 are increased and, as a result, the columnar body 15 is, for example, deformed so as to be erected straightly. In contrast, during discharging, by the extraction of the lithium ions, as shown in Fig. 3B, the volume is contracted, obliquely erected angles θ₁, θ₂, θ₃, θ₄, θ₅ are decreased, and the columnar body 15 has an initial zigzag shape.

Stress generated between the columnar body portions due to the expansion/contraction of the columnar body portions of the columnar body can be reduced by the porous space due to the protruding bodies formed in the center of the columnar body. That is, since overlap portions in which the columnar body portions are laminated are different in a composition ratio of the element, peeling is susceptible to be generated by the stress due to the expansion/contraction and thus reliability is low. However, when the space is provided in the center of the columnar body by the protruding bodies, the stress is reduced and the generation of the peeling can be remarkably reduced. As a result, long-time stability in a charging/discharging cycle is excellent and the negative electrode having high reliability can be realized.

As shown in Fig. 3A, in the start of charging, since columnar body 15 including five stages of columnar body portions is obliquely erected on convex portion 13 of current collector 11, when columnar body 15 is viewed from positive electrode 18, concave portion 12 of current collector 11 is partially shield from positive electrode 18 by columnar body 15. Accordingly, the lithium ions extracted from positive electrode 18 during charging are prevented from reaching concave portion 12 of current collector 11 by columnar body 15 of the negative electrode and most of the lithium ions are inserted to columnar body 15 such that it is possible to suppress precipitation of lithium metal. In addition, the obliquely erected angles of the five stages of columnar body portions are increased by the insertion of the lithium ions and, as a result, columnar body 15 is substantially erected with respect to current collector 11. The columnar body is not necessarily erected and may have a zigzag shape by an obliquely erected angle of 90° or less and more preferably 90°, due to the design factors such as the number or the obliquely erected angle of columnar body portions.

As shown in Fig. 3B, if the battery charged completely is discharged, columnar body 15 formed of the five stages of columnar body portions, which expands by charging, is erected with respect to current collector 11. Accordingly, electrolyte 19 between adjacent columnar bodies 15 can readily be moved through columnar bodies 15 as denoted by an arrow of the drawing. In addition, since electrolyte 19 between the columnar bodies 15 can readily convect through the space between columnar bodies 15, the movement of the lithium ions is not blocked.

As a result, it is possible to remarkably improve a high-rate discharging characteristic or a low-temperature discharging characteristic.

Hereinafter, a mechanism in which the obliquely erected angle of columnar body 15 reversibly varies according to the insertion/extraction of the lithium ions will be described with reference to Figs. 4A and 4B. Although, in the present invention, the columnar body includes n stages of columnar body portions, for convenience of description, for example, the columnar body including one columnar body portion will be described. However, the same mechanism is applicable to the configuration having n stages.

Fig. 5A is a partial cross-sectional view showing a state of the columnar body of the negative electrode before charging, in accordance with the exemplary embodiment of the present invention. Fig. 5B is a partial cross-sectional view showing a state of the columnar body of the negative electrode after charging, in accordance with the same embodiment.

In columnar body 15 shown in Figs. 5A and 5B, the content ratio of the elements of the active material made of SiOx varies such that the value of x is continuously increased from lower side 15a forming the acute angle between central line A-A of columnar body 15 and the central line AA-AA of current collector 11 to upper side 15b forming the obtuse angle of columnar body 15. As the value of x is increased from 0 to 2, the expansion amount of the active material formed of SiOx due to the insertion of the lithium ions is decreased.

That is, as shown in Fig. 5A, expansion stress which is generated by the expansion due to the insertion of the lithium ions during charging is continuously decreased from expansion stress F1 of lower side 15a of columnar body 15 to expansion stress F2 of upper side 15b. As a result, obliquely erected angle θ between central line A-A of columnar body 15 and central line AA-AA of current collector 11 varies from θ₁₀ to θ₁₁ and columnar body 15 is straightly erected in a direction denoted by an arrow of Fig. 5A. In contrast, the expansion stress is decreased by the contraction due to the extraction of the lithium ions during discharging. As a result, obliquely erected angle θ of columnar body 15 varies from θ₁₁ to θ₁₀ and columnar body 15 is deformed in a direction denoted by an arrow of Fig. 5B.

Accordingly, the obliquely erected angle of columnar body 15 reversibly varies by the insertion/extraction of the lithium ions.

According to the present exemplary embodiment, since the porous space is provided in the center of the columnar body including the n stages of columnar body portions, it is possible to remarkably reduce the stress due to the expansion/contraction of the columnar body portions configuring the columnar body. Since the heights of the columnar body portions erected obliquely are decreased to configure the columnar body in plural stages, the columnar body can be formed in an erect shape and thus only the height (thickness) of the columnar body is changed at the time of the insertion/extraction of the lithium ions, on the outside. Accordingly, the space between the adjacent columnar bodies can be maintained large. Thus, since the adjacent columnar bodies are not brought into contact with each other, it is possible to prevent wrinkles of the current collector due to the stress at the time of contact and prevent the columnar body from being peeled. As a result, it is possible to realize the non-aqueous electrolyte secondary battery which is superior in the long-time stability such as the charging/discharging cycle characteristic.

According to the present exemplary embodiment, it is possible to realize a non-aqueous secondary battery which is superior in a capacity retaining ratio, a high-rate characteristic or a low-temperature characteristic while realizing high capacity, by constructing the structure of the negative electrode which can remarkably reduce the stress due to the expansion/contraction using the active material having large expansion/contraction due to the insertion/extraction of the lithium ions.

Hereinafter, a method of manufacturing the columnar body of the negative electrode for the non-aqueous electrolyte secondary battery in accordance with the exemplary embodiment of the present invention will be described with reference to Figs. 6A to 6D, 7A to 7E and 8.

First a mechanism of forming the protruding bodies on the surface of the obtuse-angle side of the columnar body portion of the columnar body will be described with reference to Figs. 6A to 6D.

Figs. 6A to 6D are partial cross-sectional views explaining a method of forming the columnar body including the protruding body of the negative electrode for the non-aqueous secondary battery in accordance with the exemplary embodiment of the present invention. Although the columnar body includes the n stages of columnar body portions in the present invention, for convenience of description, for example, the columnar body including one columnar body portion will be described. However, the same mechanism is applicable to the configuration having the n stages.

First, as shown in Fig. 6A, concave portions 12 and convex portions 13 are formed by a plating method using a band-shaped electrolyte copper foil having a thickness 30 µm and current collector 11 in which convex portions 13 are formed at an interval of 15 µm is manufactured.

Next, as shown in Fig. 6B, the active material such as Si (scrap silicon: purity 99.999%) is made incident on convex portions 13 of current collector 11 in a direction denoted by an arrow of the drawing, by angle ω (for example, 60°) with respect to a normal direction of current collector 11. At the same time, oxygen (O₂) is supplied to current collector 11 in a direction denoted by an arrow of the drawing. Accordingly, the active material of SiOx, which is obtained by coupling Si and oxygen, is formed on convex portions 13 by angle θ₁. At this time, as the amounts of Si and O₂ are denoted by the length of the arrows, the columnar body 15 is formed in a state in which the value of x of the formed SiOx is gradually changed in a movement direction of current collector 11. For example, in Fig. 6B, the value of x of the right side of the drawing is decreased and the value of x of the left side of the drawing is increased. In Figs. 6B and 6C, convex portions 13 of the current collector are enlarged, for facilitating the understanding.

Next, as shown in Fig. 6C, columnar body 15 is grown on convex portions 13 of current collector 11 such that protruding bodies 16 are formed in the left side of the drawing in which the value of x is large.

That is, it is considered that protruding bodies 16 are generated because Si which is evaporation particles forming the columnar body 15 flies and diffuses by coupling or collision with oxygen gas during formation on current collector 11, as described below in detail. Accordingly, protruding bodies 16 are not always formed and, particularly, depends on a film deposition rate or a vacuum degree. For example, if the film deposition rate is 10 nm/s or less, the number of diffusion components is increased and only columnar body 15 is susceptible to be formed. However, this condition is not equally decided and may be changed in association with other conditions such as the vacuum degree.

Next, as shown in Fig. 6D, as described below in detail, columnar body 15 having protruding bodies 16 is formed by predetermined obliquely erected angle θ₁ so as to manufacture the negative electrode.

A mechanism of forming protruding bodies 16 on columnar body 15 depending on the film deposition rate or the vacuum degree cannot be accurately understood and will be supposed as follows.

Generally, in order to form columnar body 15 with the space formed therebetween in correspondence with convex portion 13 of current collector 11, a method of making evaporation particles from a deposition source incident into current collector 11 in oblique directions is known. In this case, columnar body 15 is macroscopically grown by an angle between the normal direction of current collector 11 and the incident direction of the evaporation particles. That is, in a process of growing columnar body 15, at the time of initial growth, as columnar body 15 is grown on the adjacent convex portions of current collectors, shadow effect of the evaporation particles is obtained by columnar body 15. As a result, since the evaporation particles do not fly in the shadow portion by columnar body 15, columnar body 15 is not grown and thus columnar body 15 having the space is formed. This is a phenomenon which is well known when the vacuum degree is high and a rectilinear motion degree of the evaporation particles is high.

Meanwhile, if oxygen gas is introduced and the vacuum degree is low, a mean free path distance of the evaporating particles which fly from the deposition source is short and components (component in which the evaporation particles are deflected by an angle different from an incident angle) which diffuse due to the coupling or collision with oxygen gas are generated. However, in the incident angle which most of the evaporation particles fly, although the evaporation particles due to the diffusion components are grown on a surface in a direction, in which the columnar body is grown, by the obliquely erected angle different from that of the columnar body, the evaporation particles are introduced into the columnar body by the growth of the most evaporation particles so as to form the columnar body which is continuously grown.

Meanwhile, a portion of the shadow in which the columnar body is grown is not exposed to the evaporation particles having an incident angle in which most of particles fly. However, among the diffusion components of the evaporation particles, the evaporation particles of the components in the direction, which is directed to at least columnar body, fly toward the surface of the portion of the shadow of the columnar body such that the evaporation particles are grown. At this time, the number of diffusion components of the evaporation particles is smaller than the number of evaporation particles forming the columnar body, the evaporation particles are not grown in a continuous film, is discretely grown so as to form the protruding bodies.

The obliquely erected angle of the formed protruding bodies depends on the flying angle of the diffusion components of the evaporation particles, similar to the obliquely erected angle of the columnar body and the protruding bodies are formed on the surface, on which the protruding bodies of the columnar body is formed, by a predetermined obliquely erected angle.

Since the protruding bodies are formed by the diffusion components of the evaporation particles, the protruding bodies can be controlled by the vacuum degree, the film deposition rate, the type and the flow rate of the introduced gas, or the shape of the convex portion of the current collector.

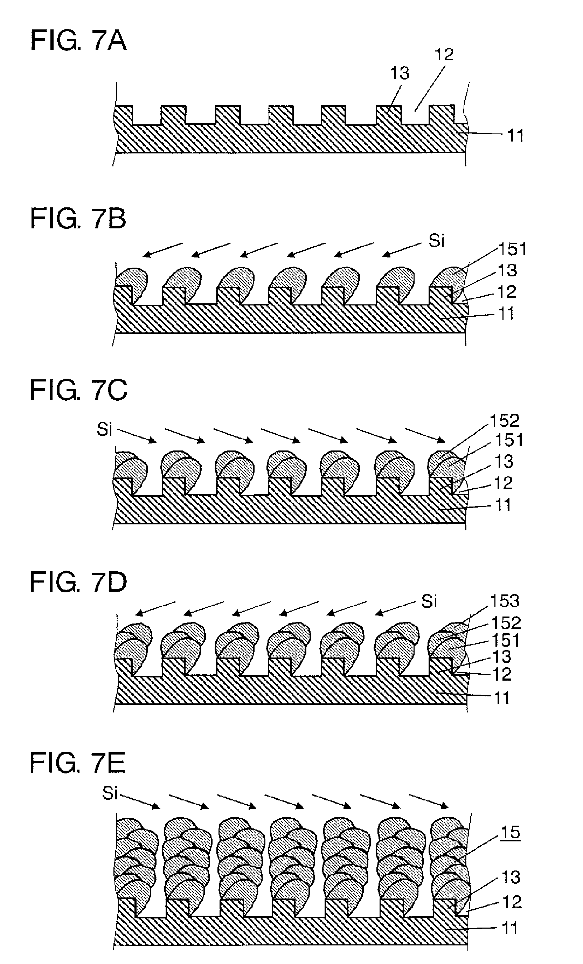

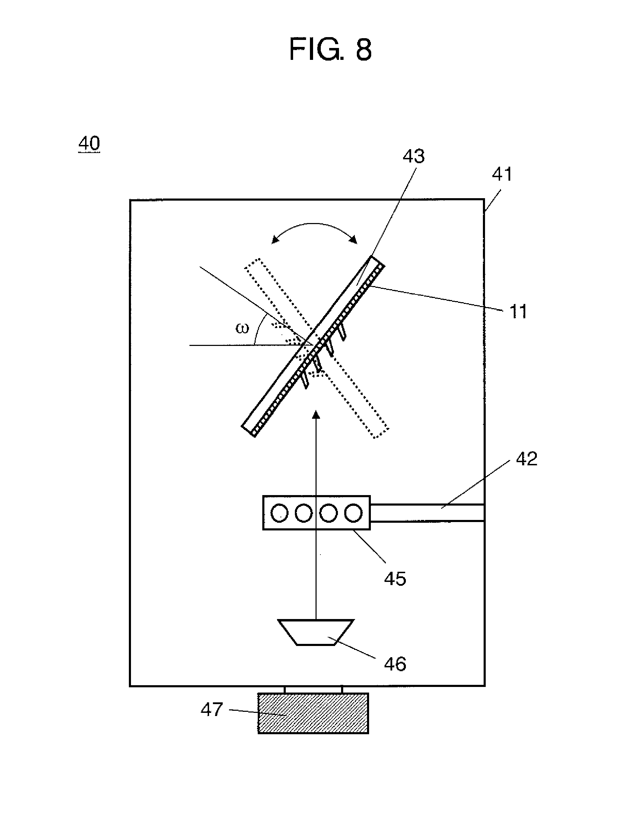

Hereinafter, a method of manufacturing the columnar body of the negative electrode for the non-aqueous electrolyte secondary battery in accordance with the exemplary embodiment of the present invention will be described with reference to Figs. 7A to 7E and 8.

Figs. 7A to 7E are partial cross-sectional views explaining a method of forming the columnar body formed of n stages of columnar body portions of the negative electrode for the non-aqueous secondary battery in accordance with the exemplary embodiment of the present invention. Fig. 8 is a schematic view showing a manufacturing apparatus.

Here, manufacturing apparatus 40 for forming the columnar body shown in Fig. 8 includes an electron beams (not shown) which is heating means, gas introduction pipe 42 for introducing oxygen gas into vacuum chamber 41, and fixing stand 43 for fixing the current collector, in vacuum chamber 41. Depressurization is performed by vacuum pump 47. Gas introduction pipe 42 includes nozzles 45 for injecting oxygen gas in vacuum chamber 41, and fixing stand 43 for fixing the current collector is provided above nozzles 45. Deposition source 46 which is deposited on the surface of the current collector so as to form the columnar body is located vertically under fixing stand 43. In manufacturing apparatus 40, the positional relationship between the current collector and deposition source 46 can be changed by the angle of fixing stand 43. That is, the obliquely erected directions of the n stages of columnar body portions of the columnar body are controlled by changing the angle ω formed by a normal direction of the surface of the current collector and a horizontal direction by fixing stand 43.

Although the present manufacturing apparatus forming the n stages of columnar body portions on one surface of the current collector to manufacture the columnar body is described as an example, actually, the apparatus generally manufactures the columnar bodies on the both surfaces of the current collector.

First, as shown in Figs. 7A and 8, concave portion 12 and convex portion 13 are formed on the surface of a band-shaped electrolyte copper foil having a thickness of 30 µm and current collector 11 in which convex portion 13 having a height of 7.5 µm, a width of 10 µm and an interval of 20 µm is formed is manufactured. In addition, current collector 11 is mounted on fixing stand 43 shown in Fig. 8.

Next, as shown in Figs. 7B and 8, fixing stand 43 is arranged with respect to deposition source 46 by the angle ω (for example, 60°) with respect to the normal direction of current collector 11 and the active material such as Si (scrap silicon: purity 99.999%) is heated and evaporated by the electron beam so as to be made incident on convex portion 13 of current collector 11 in a direction denoted by an arrow of Fig. 7B. At the same time, oxygen (O₂) gas is introduced from gas introduction pipe 42 and is supplied from nozzles 45 to current collector 11. At this time, for example, the inside of vacuum chamber 41 was in oxygen atmosphere with pressure of 3.5 Pa. Accordingly, the active material of SiOx which is obtained by coupling Si and oxygen is formed by the angle θ₁ on convex portion 13 of current collector 11 provided on fixing stand 43 provided by an angle ω such that first stage of columnar body portion 151 having a thickness of 10 µm in the obliquely erected direction and including the protruding bodies (not shown) having a predetermined height (thickness) is formed. At this time, columnar body portion 151 is formed in a state in which the value of x of the formed SiOx sequentially varies in the width direction of current collector 11. For example, in Fig. 7B, the value of x of the right side of the drawing is decreased and the value of x of the left side of the drawing is increased.

Next, as shown in Figs. 7C and 8, current collector 11 in which first stage of columnar body portion 151 is formed on convex portion 13 is arranged at the position of an angle (180-ω)) (for example, 120°) with respect to the normal direction of current collector 11 by rotating fixing stand 43 as denoted by a dotted line of the drawing. Then, the active material such as Si (scrap silicon: purity 99.999%) is evaporated from deposition source 46 and is made incident to first stage of columnar body portion 151 of current collector 11 in a direction denoted by an arrow of Fig. 7C. At the same time, oxygen (O₂) gas is introduced from gas introduction pipe 42 and is supplied from nozzles 45 to current collector 11. Accordingly, the active material of SiOx which is obtained by coupling Si and oxygen is formed on first stage of columnar body portion 151 by an angle θ₂ such that second stage of columnar body portion 152 having a thickness of 0.1 µm to 5 µm in the obliquely erected direction covers the protruding bodies of the first stage of columnar body portion 151.

At this time, the columnar body portion 152 is formed in a state in which the value of x of the formed SiOx sequentially varies in the width direction of current collector 11. For example, in second stage of columnar body portion 152 shown in Fig. 7C, the value of x of the left side of the drawing is decreased and the value of x of the right side of the drawing is increased in second stage of columnar body portion 152. Accordingly, first stage of columnar body portion 151 and second stage of columnar body portion 152 are formed such that the variation directions of the value of x thereof are reverse in the width direction of current collector 11 and the obliquely erected angles and the obliquely erected direction thereof are different from each other.

Next, as shown in Figs. 7D and 8, fixing stand 43 is returned to the same state as Fig. 7B and third stage of columnar body portion 153 is formed with a thickness (height) of 0.1 µm to 5 µm in the obliquely erected direction so as to cover the protruding bodies of second stage of columnar body portion 152. At this time, the value of x of the right side of the drawing is decreased and the value of x of the left side of the drawing is increased in third stage of columnar body 153 shown in Fig. 7D. Accordingly, second stage of columnar body portion 152 and third stage of columnar body portion 153 are formed such that the variation directions of the value of x thereof are reverse in the width direction of current collector 11 and the obliquely erected angles and the obliquely erected direction thereof are different from each other. In this case, first stage of columnar body portion 151 and third stage of columnar body portion 153 are formed in the same obliquely erected direction.

Next, as shown in Fig. 7E, the steps of Figs. 7C and 7D are repeated such that negative electrode 1 having columnar body 15 including the columnar body portions having the thickness (height) of 0.1 µm to 5 µm in the obliquely erected direction excluding the first stage of columnar body portion is manufactured. At this time, as shown in Fig. 7, for example, in columnar body 15 including columnar body portions having the thickness (height) of 2 µm to 5 µm in the obliquely erected direction excluding the first stage of columnar body portion in n=8 stages, the n=8 stages of columnar body portions configuring columnar body 15 are formed so as to cover the protruding bodies respectively. Accordingly, odd-numbered stages of columnar bodies 151, 153, 155 and 157 and even-numbered stages of columnar bodies 152, 154, 156 and 158 are formed such that the variation directions of the value of x thereof are reverse in the width direction of current collector 11 and the obliquely erected angles and the obliquely erected direction thereof are different from each other.

Although the columnar body including the n=8 stages of columnar body portions are described, the present invention is not limited thereto. For example, by repeating the process of Figs. 7B and 7C, it is possible to form the columnar body including arbitrary n (n≥2) stages of columnar body portions.

Although the manufacturing apparatus manufactures the columnar body on the current collector having a predetermined size as an example, the present invention is not limited thereto and various devices can be configured. For example, a roll-shaped current collector may be disposed between a feed roll and a rewind roll, a plurality of film forming rolls may be arranged in series therebetween, and the columnar body having n stages of columnar body portions may be manufactured while moving the current collector in one direction. After the columnar body is formed on one surface of the current collector, the columnar body may be formed on the other surface of the current collector by reversing the current collector. Accordingly, it is possible to manufacture the negative electrode with excellent productivity.

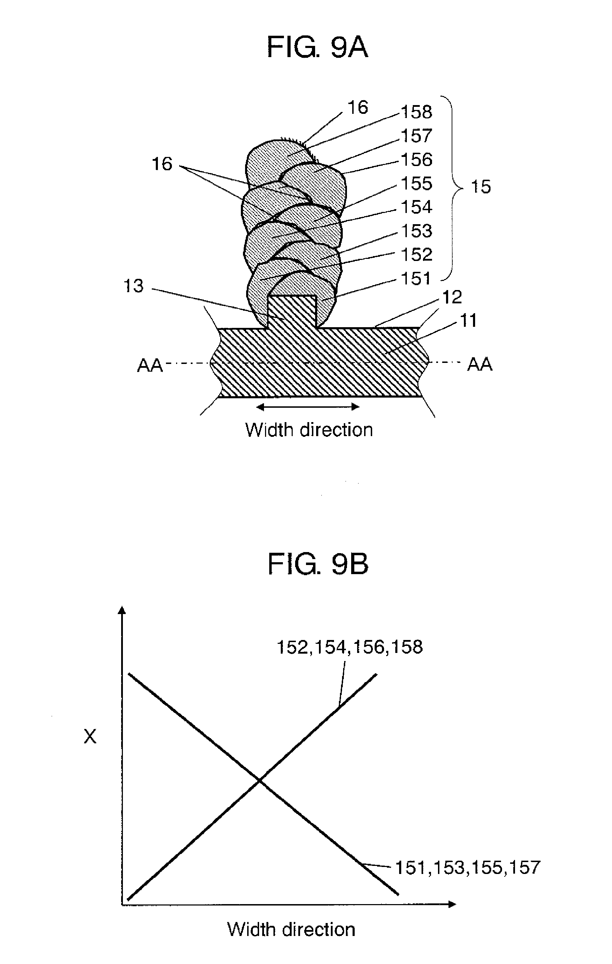

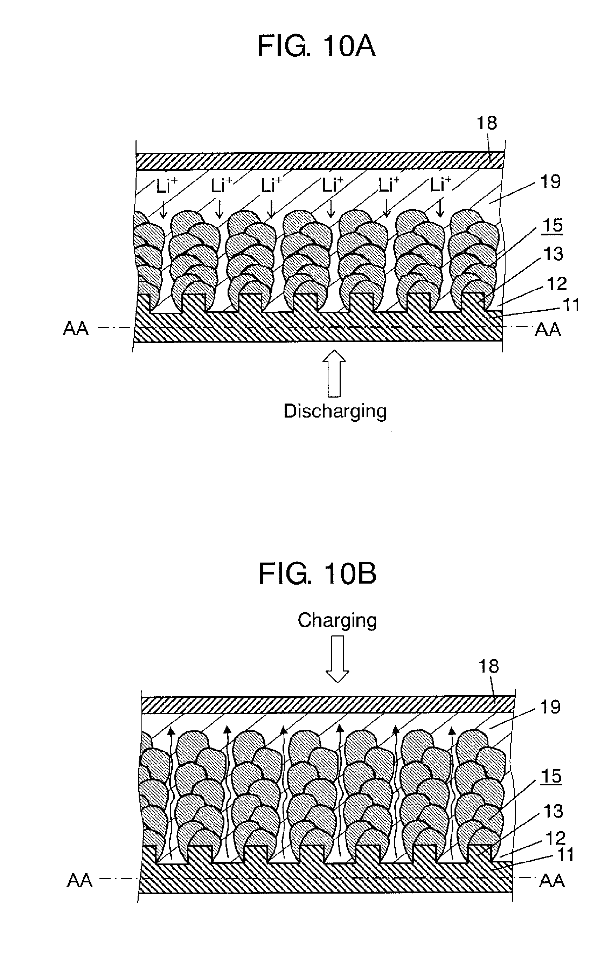

Although the example where the height of first stage of columnar body portion 151 of columnar body 15 is 10 µm and second stage of columnar body portion 152 is formed in the vicinity of the front end thereof is described, the present invention is not limited thereto. For example, as shown in Figs. 9A, 9B, 10A and 10B, all n=8 stages of columnar body portions 151 to 158 may be equally formed with a height of 2 µm to 5 µm such that convex portion 13 of current collector 11 covers at least three surfaces in the section of the longitudinal direction of the protrusion portion. In addition, the number of stages may be increased by setting the height of all the columnar body portions to 0.1 µm to 2 µm.

Here, as described above, in the three surfaces of the convex portion, for example, if the convex portion is a rectangular parallelepiped, the surfaces covered by the first stage of columnar body portion become the upper surface of the convex portion and one surface or two surfaces of the side surfaces of the convex portion. Here, if the columnar body portion is formed in a direction perpendicular to the side surfaces of the convex portion, the covered surface becomes one surface and, if not perpendicular, the covered surface becomes two surfaces. The surfaces covered by the second stage of columnar body portion become at least one surface of the three remaining surfaces when the first stage of columnar body portion covers one surface of the side surfaces of the convex portion. In addition, when the first stage of columnar body portion covers two surfaces of the side surfaces of the convex portion, the second stage of columnar body portion are formed on the two remaining surfaces. In addition, if the shape of the convex portion is elliptic or cylindrical when viewing the convex portion from the upper surface, the formation surfaces of the columnar body portion become the upper surface and the side surface of the convex portion. The surfaces covered by the first stage of columnar body portion become a portion of the upper surface and the side surface of the convex portion. The surfaces covered by the second stage of columnar body portion become a portion of the remaining side surfaces of the convex portion.

Accordingly, since the adhesion area of the protruding bodies formed in the convex portion of the current collector is large, it is possible to improve resistance against stress due to the repetition of the charging/discharging cycle. As a result, it is possible to realize the negative electrode and the non-aqueous electrolyte secondary battery with a long life span and high reliability.

Hereinafter, the present invention is described in more detail with reference to the embodied examples. The present invention is not limited to the following embodied examples and used materials and so on may be modified without departing from the scope of the present invention.

### Embodied example 1

The columnar body of the negative electrode was manufactured using the manufacturing apparatus shown in Fig. 8.

First, as the current collector, a band-shaped electrolyte copper foil having a thickness of 30 µm, in which a convex portion was formed on the surface thereof with a height of 7.5 µm, a width of 30 µm, an interval of 20 µm using a plating method, was used.

A vapor deposition unit (a unit including a deposition source, a crucible and an electron beam generator) is used and an oxygen gas with a purity of 99.7% is introduced through nozzle 45 into a vacuum chamber. Thus, a columnar body made of SiOx is produced in which a value of x is changed in the width direction. At this time, the inside of vacuum chamber is made to be an atmosphere of oxygen with a pressure of 3.5 Pa. Furthermore, at the time of vapor deposition, an electron beam generated by an electron beam generator is deflected by a deflection yoke, and the deposition source is irradiated with the electron beam. As the vapor deposition source, for example, a scrap material (scrap silicon: purity 99.999%) generated when semiconductor wafers are formed is used.

The columnar body portion was formed by adjusting the angle of the fixing stand to set the angle ω to 60° and setting a film deposition rate to about 8 nm/s. Accordingly, the first stage of columnar body portion (having, for example, a height of 10 µm and a cross-section area of 150 µm²) was formed. Similarly, n=2 to 8 stages of columnar body portions (having, for example, a height of 3 µm and a cross-section area of 150 µm²) were formed by the forming method described in the exemplary embodiment.

When the angle of the central line of the current collector to the columnar body of the negative electrode was evaluated by cross-section observation using scanning electron microscope (S-4700 made by Hitachi, Ltd.), the obliquely erected angle of each stage of columnar body portion was about 41°. At this time, the thickness (height) of the formed columnar body was 31 µm, with respect to the normal direction.

When an oxygen distribution was examined by measuring a linear distribution in the cross-section direction of respective stage of the columnar body portions configuring the columnar body of the negative electrode using an electron beam micro probe analyzer (hereinafter referred to as "EPMA"), the oxygen concentration (value of x) was continuously increased in the (180-θ) direction from the obliquely erected angle θ in the width direction of the columnar body portions. The increase directions of the oxygen concentration (value of x) of the odd-numbered stages of columnar body portion and the even-numbered stages of columnar body portion were opposite to each other. At this time, a range of x was 0.1 to 2 and an average thereof was 0.6.

Accordingly, the negative electrode having the three stages of columnar body portions on the convex portion of the current collector was manufactured.

Thereafter, Li metal of 16 µm was deposited on the surface of the negative electrode by a vacuum deposition method. In an inner circumference side of the negative electrode, a negative electrode lead made of Cu was welded to an exposure portion provided in a Cu foil which does not face a positive electrode.

Next, the positive electrode having a positive electrode active material capable of inserting/extracting lithium ions was manufactured by the following method.

First, 93 parts by weight of LiCoO₂ powder which is the positive electrode active material and 4 parts by weight of acetylene black which is a conductive agent were mixed. An N-mothyl-2-pyrolidone (NMP) solution (product No. #1320 made by KUREHA CORPORATION) of polyvinylidene-fluoride (PVDF) which is a binder was mixed to the obtained powder such that the weight of PVDF became 3 parts by weight. A predetermined amount of NMP was added to the obtained mixture to manufacture a paste for a positive electrode mixture. The obtained paste for the positive electrode mixture was coated on the both sides of the positive electrode current collector (thickness of 15 µm) including an aluminum (Al) foil using a doctor blade method, was rolled such that the density of the positive electrode mixture layer was 3.5 g/cc and the thickness became 160 µm, was sufficiently dried at 85°C, and was cut, thereby manufacturing the positive electrode. In an inner circumference side of the positive electrode, a positive electrode lead made of Al was welded to an exposure portion provided in an Al foil which does not face the negative electrode.

The negative electrode and the positive electrode manufactured as described above were laminated with a separator made of porous polypropylene and having a thickness of 25 µm interposed therebetween so as to configure an electrode group of 40 mm x 30 mm. Then, an ethylene carbonate/diethyl carbonate mixture solution of LiPF₆ was impregnated in the electrode group as an electrolyte so as to be accommodated in armored case (material: aluminum) and an opening of the armored case was sealed, thereby manufacturing a lamination type battery. The design capacity of the battery was 21 mAh. This was Sample 1.

### Embodied example 2

A negative electrode was manufactured similar to the Embodied example 1, except that the angle ω became 70° by adjusting the angle of the fixing stand.

The obliquely erected angle of each stage of columnar body portion was about 54° and the thickness (height) of the formed columnar body was 31 µm.
By the measurement of the EPMA, in the width direction of each stage of columnar body portion, the oxygen concentration (value of x) was continuously increased in the (180-θ) direction from the side of obliquely erected angle θ. The increase direction of the oxygen concentration (value of x) of the odd-numbered stages of columnar body portion and that of the even-numbered stages of columnar body portion were opposite to each other. At this time, a range of x was 0.1 to 2 and an average thereof was 0.6.

A non-aqueous electrolyte secondary battery manufactured by the same method as Embodied example 1 was Sample 2, except that the above-described negative electrode was used.

### Embodied example 3

A negative electrode was manufactured similar to the Embodied example 1, except that the angle ω becomes 50° by adjusting the angle of the fixing stand.

The obliquely erected angle of each stage of columnar body portion was about 31° and the thickness (height) of the formed columnar body was 31 µm.
By the measurement of the EPMA, in the width direction of each stage of columnar body portion, the oxygen concentration (value of x) was continuously increased in the (180-θ) direction from the side of obliquely erected angle θ. The increase directions of the oxygen concentration (value of x) of the odd-numbered stages of columnar body portion and the even-numbered stages of columnar body portion were opposite to each other. At this time, a range of x was 0.1 to 2 and an average thereof was 0.6.

A non-aqueous electrolyte secondary battery manufactured by the same method as the Embodied example 1 was Sample 3, except that the above-described negative electrode is used.

### Embodied example 4

A negative electrode was manufactured similar to the Embodied example 1, except that the columnar body including 10 stages of columnar body portions is formed and the thickness of each stage of the columnar body portions was 3 µm.

The obliquely erected angle of each stage of columnar body portion was about 41° and the thickness (height) of the formed columnar body was 30 µm.

By the measurement of the EPMA, in the width direction of each stage of columnar body portion, the oxygen concentration (value of x) was continuously increased in the (180-θ) direction from the side of obliquely erected angle θ. The increase direction of the oxygen concentration (value of x) of the odd-numbered stages of columnar body portion and that of the even-numbered stages of columnar body portion were opposite to each other. At this time, a range of x was 0.1 to 2 and an average thereof was 0.6.

A non-aqueous electrolyte secondary battery manufactured by the same method as the Embodied example 1 was Sample 4, except that the above-described negative electrode is used.

### Embodied example 5

A negative electrode was manufactured similar to the Embodied example 1, except that the columnar body including 15 stages of columnar body portions was formed and the thickness of each stage of the columnar body portions was 2 µm.

The obliquely erected angle of each stage of columnar body portion was about 41° and the thickness (height) of the formed columnar body was 30 µm.

By the measurement of the EPMA, in the width direction of each stage of columnar body portion, the oxygen concentration (value of x) was continuously increased in the (180-θ) direction from the side of obliquely erected angle θ. The increase direction of the oxygen concentration (value of x) of the odd-numbered stages of columnar body portion and that of the even-numbered stages of columnar body portion were opposite to each other. At this time, a range of x was 0.1 to 2 and an average thereof was 0.6.

Thereafter, Li metal of 15 µm was deposited on the surface of the negative electrode by a vacuum deposition method. A non-aqueous electrolyte secondary battery manufactured by the same method as the Embodied example 1 was Sample 5, except that the above-described negative electrode was used.

### Embodied example 6

A negative electrode was manufactured similar to the Embodied example 1, except that the columnar body including 30 stages of columnar body portions was formed and the thickness of each stage of the columnar body portions was 1 µm.

The obliquely erected angle of each stage columnar body portion was about 41° and the thickness (height) of the formed columnar body was 30 µm.

By the measurement of the EPMA, in the width direction of each stage of columnar body portion, the oxygen concentration (value of x) was continuously increased in the (180-θ) direction from the side of obliquely erected angle θ. The increase direction of the oxygen concentration (value of x) of the odd-numbered stages of columnar body portion and that of the even-numbered stages of columnar body portion were opposite to each other. At this time, a range of x was 0.1 to 2 and an average thereof was 0.6.

Thereafter, Li metal of 15 µm was deposited on the surface of the negative electrode by a vacuum deposition method. A non-aqueous electrolyte secondary battery manufactured by the same method as the Embodied example 1 was Sample 6, except that the above-described negative electrode was used.

### Embodied example 7

A negative electrode was manufactured similar to the Embodied example 1, except that the columnar body including 5 stages of columnar body portions having a thickness 5 µm respectively was formed in oxygen atmosphere in which the internal pressure of the vacuum chamber was 1.7 Pa.

The obliquely erected angle of each stage of columnar body portion was about 41° and the thickness (height) of the formed columnar body was 25 µm.

By the measurement of the EPMA, in the width direction of each columnar body portion, the oxygen concentration (value of x) was continuously increased in the (180-θ) direction from the side of obliquely erected angle θ. The increase direction of the oxygen concentration (value of x) of the odd-numbered stages of columnar body portion and that of the even-numbered stages of columnar body portion were opposite to each other. At this time, a range of x was 0.1 to 2 and an average thereof was 0.3.

Thereafter, Li metal of 10 µm was deposited on the surface of the negative electrode by a vacuum deposition method.

A non-aqueous electrolyte secondary battery manufactured by the same method as the Embodied example 1 was Sample 7, except that the above-described negative electrode was used.

### Embodied example 8

A negative electrode was manufactured similar to the Embodied example 1, except that the columnar body including 60 stages of columnar body portions was formed and the thickness of each stage of the columnar body portions was 0.5 µm.

The obliquely erected angle of each stage of columnar body portion was about 41° and the thickness (height) of the formed columnar body was 30 µm.

By the measurement of the EPMA, in the width direction of each columnar body portion, the oxygen concentration (value of x) was continuously increased in the (180-θ) direction from the side of obliquely erected angle θ. The increase direction of the oxygen concentration (value of x) of the odd-numbered stages of columnar body portion and that of the even-numbered stages of columnar body portion were opposite to each other. At this time, a range of x was 0.1 to 2 and an average thereof was 0.6.

Thereafter, Li metal of 15 µm was deposited on the surface of the negative electrode by a vacuum deposition method.

A non-aqueous electrolyte secondary battery manufactured by the same method as the Embodied example 1 was Sample 8, except that the above-described negative electrode was used.

### Comparative example 1

A negative electrode was manufactured by the same method as the Embodied example 1, except that a columnar body having one columnar body portion was obliquely erected with a height (thickness) of 30 µm.

When the angle with respect to the central line of the current collector to the columnar body of the negative electrode was evaluated by cross-section observation using scanning electron microscope (S-4700 made by Hitachi, Ltd.), the obliquely erected angle of columnar body portion was about 41°. At this time, the thickness (height) of the formed columnar body was 30 µm.

When an oxygen distribution was examined by measuring a linear distribution in the cross-section direction of the columnar body of the negative electrode using the EPMA, the oxygen concentration (value of x) was continuously increased in the (180-θ) direction from the side of obliquely erected angle θ in the width direction. At this time, a range of x was 0.1 to 2 and an average thereof was 0.6.

Except for the above-described negative electrode, the non-aqueous electrolyte secondary battery manufactured by the same method as the Embodied example 1 was Sample C1.

The following evaluation was performed with respect to the non-aqueous electrolyte secondary battery manufactured as described above.

### Measurement of Capacity of Battery

The non-aqueous electrolyte secondary battery was charged/discharged in the following conditions at an environment temperature of 25°C.

First, with respect to the design capacity (21 mAh), charging was made until the voltage of the battery becomes 4.2 V at constant current having an hour rate of 1.0 C (21 mA) and constant-voltage charging for attenuating from the constant voltage of 4.2 V to a current value having an hour rate of 0.05 C (1.05 mA) was made. Thereafter, the charging was ceased during 30 minutes.

Thereafter, discharging was made by constant current at a current value having an hour rate of 0.2 C (4.2 mA) until the voltage of the battery is reduced to 3.0 V

Then, the above-described steps are set as one cycle and discharging capacity of a third cycle was evaluated as the capacity of the battery. Charging/Discharging Cycle Characteristic

The non-aqueous electrolyte secondary battery was charged/discharged in the following conditions at an environment temperature of 25°C.

First, with respect to the design capacity (21mAh), charging was made until the voltage of the battery becomes 4.2 V at constant current having an hour rate of 1.0 C (21 mA) and charging was made until charging current was decreased to a current value having an hour rate of 0.05 C (1.05 mA) at a constant voltage of 4.2 V. Thereafter, the charging was ceased during 30 minutes.

Thereafter, discharging was made by constant current at a current value having an hour rate of 0.2 C (4.2 mA) until the voltage of the battery was reduced to 3.0 V Then, the discharging was ceased during 30 minutes.

The charging/discharging cycle was set as one cycle and the cycle was repeated 500 times. The charging/discharging cycle characteristic was evaluated by a capacity retaining ratio (%), which is a percentage of a discharging capacity, of a 500th cycle to a discharging capacity of a first cycle. That is, as the capacity retaining ratio is close to 100, the charging/discharging cycle characteristic is excellent.

A percentage of the discharging capacity at the time of discharging of 0.2 C (4.2 mA) to the charging capacity was set as charging/discharging efficiency (%). In addition, a ratio of the discharging capacity at the time of high-rate discharging of 1.0 C (21 mA) to the discharging capacity at the time of discharging of 0.2 C (4.2 mA) was set as a high-rate ratio (%).

The capacity retaining ratio, charging/discharging efficiency and a high-rate ratio were measured in a tenth cycle and a 500th cycle.

Hereinafter, the parameters and the evaluation results of Samples 1 to 8 and Sample C1 are shown in Table 1 and Table 2.

**Table 1**

| | Vacuum degree during introducing O₂(Pa) | n (stage) | Obliquely erected angle(°) | Thickness of first stage columnar body portion (µm) | Thickness of columnar body (µm) | Average value x in SiOx |
|---|---|---|---|---|---|---|
| Sample 1 | 3.5 | 8 | 41 | 10 | 31 | 0.6 |
| Sample 2 | 3.5 | 8 | 54 | 10 | 31 | 0.6 |
| Sample 3 | 3.5 | 8 | 31 | 10 | 31 | 0.6 |
| Sample 4 | 3.5 | 10 | 41 | 3 | 30 | 0.6 |
| Sample 5 | 3.5 | 15 | 41 | 2 | 30 | 0.6 |
| Sample 6 | 3.5 | 30 | 41 | 1 | 30 | 0.6 |
| Sample 7 | 1.7 | 5 | 41 | 5 | 25 | 0.3 |
| Sample 8 | 3.5 | 60 | 41 | 0.5 | 30 | 0.6 |
| Sample C1 | 3.5 | 1 | 41 | 30 | 30 | 0.6 |

**Table 2**

| | Cycle number (times) | Charging/ discharging efficiency | High-rate ratio (%) | Capacity retaining ratio (%) |
|---|---|---|---|---|
| Sample 1 | 10 | 99.8 | 93 | 100 |
| | 500 | 99.8 | 88 | 80 |
| Sample 2 | 10 | 99.8 | 93 | 100 |
| | 500 | 99.8 | 88 | 82 |
| Sample 3 | 10 | 99.8 | 93 | 100 |
| | 500 | 99.8 | 87 | 79 |
| Sample 4 | 10 | 99.8 | 93 | 100 |
| | 500 | 99.8 | 87 | 81 |
| Sample 5 | 10 | 99.8 | 93 | 100 |
| | 500 | 99.8 | 88 | 81 |
| Sample 6 | 10 | 99.8 | 93 | 100 |
| | 500 | 99.8 | 88 | 82 |
| Sample 7 | 10 | 99.8 | 93 | 100 |
| | 500 | 99.8 | 87 | 78 |
| Sample 8 | 10 | 99.8 | 93 | 100 |
| | 500 | 99.8 | 88 | 82 |
| Sample C1 | 10 | 99.8 | 93 | 100 |
| | 500 | 99.2 | 83 | 48 |

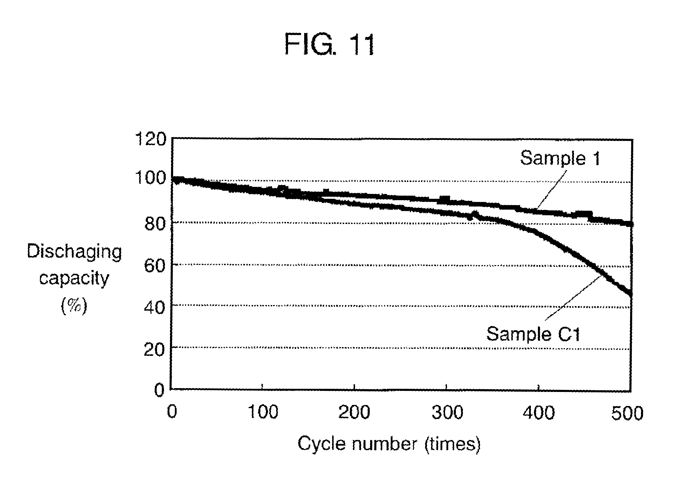

Fig. 11 shows the evaluation result of Sample 1 and Sample C1 as an example of the charging/discharging cycle characteristic.

As shown in Table 1, Table 2 and Fig. 11, compared with Sample 1 and Sample C1, the capacity retaining ratio was hardly changed in about the tenth cycle. However, in the 500^{th} cycle, Sample 1 has a capacity retaining ratio of about 80% and Sample C1 has a capacity retaining ratio which is decreased to about 48%. This is because the porous space is provided by the protruding bodies in the center of the columnar body including the plurality of columnar bodies so as to realize a multi-stage configuration. Accordingly, it is possible to suppress peeling generated by the stress due to the expansion/contraction, which is generated because the composition ratios of elements in the interfaces between the laminated columnar body portions are different, and prevent adjacent columnar body portions from being brought into contact with each other during charging/discharging. As a result, it is possible to suppress wrinkles or distortion of the current collector and peeling or break of the columnar body.

As shown in Table 1 and Table 2, in Sample 1 to Sample 3, it can be seen that, although the obliquely erected angle of each of the columnar body portions of the columnar body varies from 31° to 54°, the capacity retaining ratio, the charging/discharging efficiency and the high-rate ratio hardly vary and excellent characteristic can be maintained.

In Sample 1, Sample 4 to Sample 6, and Sample 8, it can be seen that, although the number of stage of the columnar body portions configuring the columnar body varies, the capacity retaining ratio, the charging/discharging efficiency and the high-rate ratio hardly vary and excellent characteristic can be maintained.

In Sample 1 and Sample 7, if the average value of x of SiOx configuring the columnar body is 0.3 and 0.6 respectively, the capacity retaining ratio after the 500 cycles was slightly decreased in Sample 7 having a small average value of x, compared with Sample 1 having a large average value of x. The small average value of x corresponds to large expansion/contraction during charging/discharging. Accordingly, the stress or the distortion of the current collector due to the expansion/contraction of the columnar body is increased and the capacity retaining ratio is slightly decreased.

As described above using the embodied examples, since the negative electrode including the columnar body including the plurality of columnar body portions formed on the convex portion of the current collector and having a porous space formed by the protruding bodies in the center thereof is used, it can be seen that it is possible to realize the non-aqueous electrolyte secondary battery capable of remarkably improving a cycle characteristic.

Although the embodied example in which Si or SiOx is used as the active material of the columnar body is described, the present invention is not specially limited if an element capable of reversibly inserting/extracting lithium ions is used and at least one element of Al, In, Zn, Cd, Bi, Sb, Ge, Pb and Sn may be preferably used. A material other than the above-described elements may be included as the active material. For example, transition metal or 2A group elements may be included.

In the present invention, the shape and the formation interval of the convex portions formed on the current collector is not limited to the contents described in the above-mentioned exemplary embodiments and may be modified to any shape if the columnar body erected obliquely can be formed.

The obliquely erected angle formed by the central line of the columnar body and the central line of the current collector and the shape and the size of the columnar body are not limited to the above-mentioned exemplary embodiments and may be properly modified according to the necessary characteristics of the used non-aqueous electrolyte secondary battery or the method of manufacturing the negative electrode.

### INDUSTRIAL AVAILABILITY

According to a negative electrode for a non-aqueous electrolyte secondary battery of the present invention, it is possible to provide a non-aqueous electrolyte secondary battery which is superior in a high-rate characteristic or a charging/discharging cycle characteristic, while realizing high capacity. Accordingly, the non-aqueous electrolyte secondary battery can be used in a mobile electronic apparatus such as a mobile telephone or a PDA or a large electronic apparatus, which is expected to be in great demands in the future.

## Claims

1. A negative electrode for a non-aqueous electrolyte secondary battery, which reversibly inserts/extracts lithium ions, the negative electrode comprising:
a current collector in which a concave portion and a convex portion are formed at least one surface thereof; and
a columnar body which is formed by laminating n (n≥2) stages of columnar body portions which are obliquely erected on the convex portion of the current collector and in which a content ratio of elements sequentially vary in a longitudinal direction of the current collector, and which has a configuration in which variation directions of content ratios of elements of odd-numbered stages of columnar body portions and even-numbered stages of columnar body portions are different from each other,
wherein a plurality of protruding bodies are provided on surfaces of the columnar body portions at the side in which intersection angles between central lines of obliquely erected directions of the columnar body portions and a central line of a thickness direction of the current collector forms an obtuse angle, and a space is provided in the columnar body by the protruding bodies of the laminated columnar body portions.

2. The negative electrode for a non-aqueous electrolyte secondary battery of claim 1, wherein at least two surfaces of the convex portion of the current collector in the section of the longitudinal direction are covered by a first stage of columnar body portion and one remaining surface is covered by a second stage of columnar body portion.

3. The negative electrode for a non-aqueous electrolyte secondary battery of claim 1, wherein, in at least a discharging state, the n stages of columnar body portions of the columnar body are laminated by overlapping odd-numbered stages of columnar body portions and even-numbered stages of columnar body portions in the thickness direction in a zigzag shape.

4. The negative electrode for a non-aqueous electrolyte secondary battery of claim 1, wherein an angle of an acute-angle side of the columnar body portion in at least charging state is larger than that in a discharging state.

5. The negative electrode for a non-aqueous electrolyte secondary battery of claim 1, wherein an active material which reversibly inserts/extracts at least the lithium ions and has theoretical capacity density of more than 833 mAh/cm³ is used as the columnar body portions.

6. The negative electrode for a non-aqueous electrolyte secondary battery of claim 5, wherein a material expressed by SiOx including at least silicon is used as the active material.

7. The negative electrode for a non-aqueous electrolyte secondary battery of claim 6, wherein a value of x of the material expressed by SiOx including silicon is continuously increased from a side forming an acute angle to a side forming an obtuse angle, with respect to the intersection angles between the central lines of the obliquely erected directions of the columnar body portions and the central line of the thickness direction of the current collector.

8. A method of manufacturing a negative electrode for a non-aqueous electrolyte secondary battery which reversibly inserts/extracts lithium ions, the method comprising:
a first step of forming a concave portion and a convex portion on at least one surface of a current collector;
a second step of forming a first stage of columnar body portion, which is obliquely erected and has a protruding body on the convex portion;
a third step of forming a second stage of columnar body portion having a protruding body, which is obliquely erected in a direction different from that of the first stage of columnar body portion, on the columnar body portion; and
a fourth step of repeating the second step and the third step such that the obliquely erected directions of the odd-numbered stages of columnar body portions and the even-numbered stages of columnar body portions are different from each other, and forming a columnar body having a space formed by the protruding bodies and n (n≥2) stages of columnar body portions.

9. The method of manufacturing a negative electrode for a non-aqueous electrolyte secondary battery of claim 8, wherein, in the second step, the first stage of columnar body portion is obliquely erected on the convex portion so as to cover at least two surfaces in the section of the longitudinal direction of the convex portion, and
in the third step, the second stage of columnar body portion which is obliquely erected on the first stage of columnar body portion in the direction different from that of the first stage of columnar body portion is formed so as to cover the one remaining surface in the section of the longitudinal direction of the convex portion.

10. A non-aqueous electrolyte secondary battery comprising:
the negative electrode for the non-aqueous electrolyte secondary battery of claim 1;
a positive electrode which reversibly inserts/extracts lithium ions; and
a non-aqueous electrolyte.
